# EUROPEAN PATENT APPLICATION

(11) **EP 2 150 035 A1**
(43) Date of publication of application: **03.02.2010**
(21) Application number: 08290815.3
(22) Date of filing: 28.07.2008
(51) Int. Cl.: H04M 1/725, H04L 29/06

(54) **Method for communicating, a related system for communicating and a related transforming part**

(71) Applicant: Alcatel Lucent, 75008 Paris (FR)
(72) Inventor: Lou, Zhe, 2000 Antwerp (BE); Trappeniers, Lieven, 2200 Herentals (Noorderwijk) (BE); Godon, Marc Bruno Frieda, 1840 Londerzeel (BE)
(74) Representative: Narmon, Gisèle Marie Thérèse

(57) **Abstract**

The present invention relates to a method, a related system device and related transforming part for communicating a first multimedia communications signal from a first communication device to at least one further communications device over a communications network. This method first comprises the step of the first communications device sending the first multimedia communications signal to at least one further communications device wherein the communications network comprises a network element and where the method for multimedia communications further comprises the step of the first communications device sending a second, non verbal communications signal in addition to the first, multimedia communications signal towards said at least one further communications device and subsequently the step of transforming, by a transforming part, at least part of the second, non verbal communications signal into a predetermined third, multimedia communications signal said third multimedia communications signal being in support of said first, multimedia communications signal.

The method further comprises the step of sending, by a transmitting part, the third, communications signal to at least one of the first communications device and the further communication devices in addition to the first, multimedia communications signal.

## Description

The present invention relates to a method for communicating according to the preamble of claim 1 and a system for communicating according to the preamble of claim 6.

Such a subject is already known in the art, e.g. from "*US PATENT* US 2004/0189484 *"COMMUNICATING APPARATUS FOR DEMONSTRATING A NON AUDIO MESSAGE BY DECODED VIBRATIONS*". Therein, a communication method and related apparatus is described that, possibly in addition to handling audio communication, is capable of encoding non audio messages, i.e. text messages into a vibration signal.

A first, sending, user can use an information interface of the communications device, such as sensors or a touch-panel to generate some simple, basic expressions such as text data that could be encoded into a vibration signal in such way that the second, receiving, user can identify the non audio messages by tactile sense.

Disadvantageously, there is not a causal link between a first, communication such as a potential verbal communication and the second, non-verbal communication, i.e. the encoding of non-verbal signal to vibration signal, and additionally the users themselves need to generate the non-verbal communication via the information interface of the communications device, by, for example, selecting it from a menu, typing a text on de keyboard of the communications device. Hence, the second, non-verbal, communication is in possibly in addition to, but fully independent of a potential first verbal communication and is therefore not supporting a potential first verbal communication.

An object of the present invention is to provide a method for communicating of the above known type but wherein a first communication is better supported by a second, additional communication.

According to the invention, this object is achieved by the method for communicating according to claim 1, the system for communicating according to claim 6 , the transforming part according to claim 8 and the transforming network element according to claim 9.

Indeed by sending, by means of a first communications device, a second, non verbal communications signal in addition to this first, multimedia communications signal towards at least one further communications device and transforming, at least part of the second, non verbal communications signal into a third predetermined communications signal where this third predetermined signal is tailored to the first multimedia communications signal and the third communications signal being in support of said first, multimedia communications signal in that meaning that it adds additional aspects, like additional meanings, emotions and feelings to the first multimedia communication by means of the third communications signal.

The third communication signal may be any multimedia signal like sound, vision a combination thereof or for instance vibration signals that are adapted to supporting the first multimedia communications signal.

The second, non-verbal signal may be tapping with a finger on a touch sensor of the first communications device or be a compass sensor detecting the motion of the mobile handheld, any inputs on a touch screen of a communications device like touches e.g. drawing making on screen.

Hence the generated third predetermined communications signal is optimum supporting the first multimedia communication as it is a user chosen multimedia signal that optimum fits to the first multimedia communication.

By choice of the user, i.e. by generating the non-verbal communications signal where the third predetermined communications signal corresponds to, the user selects a predefined and predetermined third communications signal that optimum supports the first multimedia communications signal according to the feeling or insight of the user of the first communications device CD1.

Another characterizing embodiment of the present invention is described in claim 2 and claim 7.

The sending of the third, multimedia communications signal to at least one of the first communications device and the further communication devices in addition to said first, multimedia communications signal the first multimedia communications signal is supported in that additional non verbal elements are added to the first multimedia communications signal.

A further characterizing embodiment of the present invention is described in claim 3.

The transforming of the at least part of the second non-verbal communications signal into the third communications signal is based on at least one predefined third communications signal that corresponds to the at least part of the second non-verbal communications signal.

At detection of a second non-verbal communications signal or part thereof, a corresponding predetermined communications signal is determined from a set where this set comprises at least one second non-verbal communications signal, with at least one corresponding third communications signal associated to each of the second non-verbal communications signals and subsequently, this second non-verbal communications signal or part thereof may be transformed into a corresponding predetermined third communications signal.

Here for, a database, may be used, that contains a set of at least one second non-verbal communications signal with at least one third communications signal being associated to each of the at least one second non-verbal communications signal. Like for instance a first non-verbal signal is associated to a certain sound with animation, a second non-verbal signal is associated with a second animation only and a third non-verbal signal is associated with again another sound vibration and an other animation etc.

Another characterizing embodiment of the present invention is described in claim 4.

The transforming of the at least part of the second, non-verbal communications signal into the third communications signal is additionally based on preferences of a user.

Additionally there may be a user profile defined for a user and in case there is in the set that comprises at least one second non-verbal communications signal, with a plurality corresponding third communications signal associated to each of the second non-verbal communications signals then the user profile is used for determining a third communications signal from the plurality of third communications signals that are defined for a single second non-verbal communications signal. Subsequently, this second non-verbal communications signal or part thereof may be transformed into the determined corresponding third communications signal.

Even a further characterizing embodiment of the present invention is described in claim 5.

The step of transforming the at least part of said second non-verbal communications signal into said third communications may be based on capabilities of the communication devices (CD1, CD2, CD3).

The transforming of at least part of the second non-verbal communications signal into the third communications signal is based on capabilities of the communication devices. In the step of transforming second non-verbal communications signal into the third communications signal, the capabilities of the communication devices are detected and additionally based on the detected capabilities of one or more communication devices, the non-verbal communications signal is generated.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents an implementation of a communications system according to the present invention.
Fig. 2 represents functional representation of a network element including a transformation part according to the present invention.

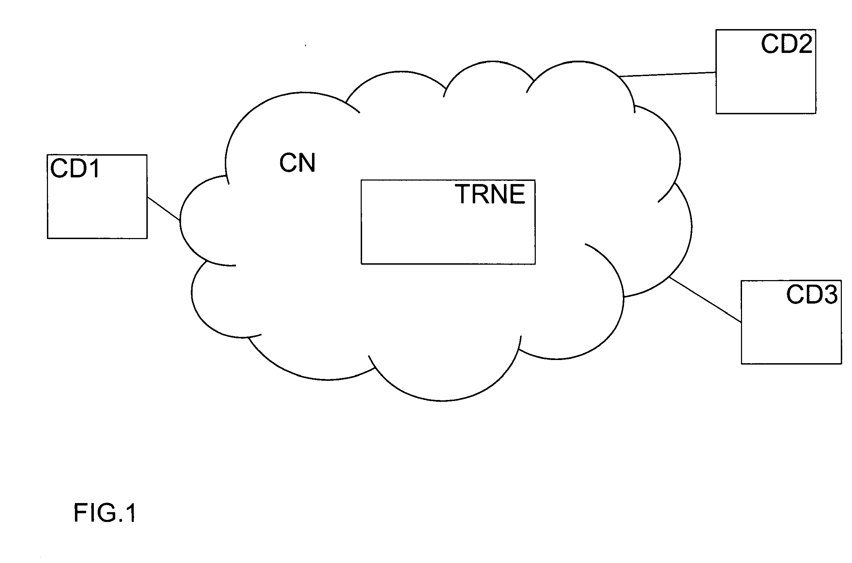

In the following paragraphs, referring to the drawing in FIG.1, an implementation of the communications system is described. In the second paragraph, all connections between mentioned elements are defined.

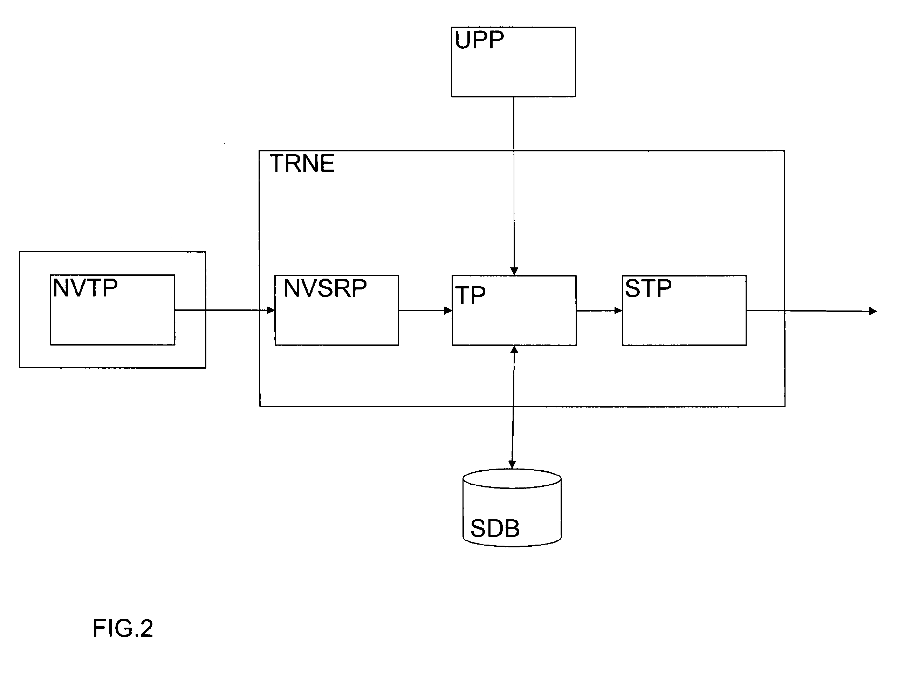

Subsequently all relevant functional means of the mentioned system as presented in FIG.2 are described followed by a description of all interconnections. In the succeeding paragraph the actual execution of the communication system is described.

The communications system of the present invention includes a first communication device CD1 and at least one further communications device CD2, CD3 for communicating with each other. Such communication devices may be any mobile or fixed communication terminal having multimedia capabilities, but also any mobile and fixed communications devices having audio-visual means, like speaker and a display possibly in combination with any vibrating signal generating means.

The system further comprises a communications network like a mobile or fixed telephone communications network, a Voice over IP network or GSM, CDMA or3G network. This communications network may also include a network element TRNE that incorporates the transformation functionality for transforming at least part of a second, non verbal communications signal, sent by the first communications device CD1, into a predetermined third, communications signal said third communications signal being in support of a first, multimedia communications signal being exchanged between the first communications device CD1 and any further communication devices CD2, CD3.

The Communications network couples all communications devices CD1, CD2, CD3 and the network element TRNE, for instance, over a wireless connection or any wire connection.

Further, the first communications device comprises a non-verbal communications signal transmitting part NVTP, for transmitting the non-verbal signal like a haptic signal generated by tapping a touch sensor at the first communications device CD1 to the transforming network element TRNE. Alternatively the non verbal signal could be the detection of movement of a mobile handheld by a compass sensor included in the handheld device or the detection of touching a touch screen of a communications device.

The transforming network element TRNE has a non verbal signal reception part NVSRP that is able to receive the non verbal communications signal sent by the first communications device CD1, a transforming part TP that is adapted to transform at least part of the second, non verbal communications signal into a predetermined third, communications signal where the third communications signal is in support of a first, multimedia communications signal being exchanged between the first communications device CD1 and any further communication devices CD2, CD3.

Further the network element TRNE includes a signal transmitting part STP that is adapted to transmit the third, communications signal to at least one of the first communications device CD1 and the further communication devices CD2, CD3 in addition to the first, multimedia communications signal.

Additionally there may be a user preferences holding part UPP that is adapted to hold, collect and update a user profile for a user of the communications system like the user corresponding to communications device CD1. This user profile may be used for determining the kind of transformation of the second non-verbal communications signal into the third communications signal.

In case there is in the set that comprises at least one second non-verbal communications signal, with a plurality corresponding third communications signal associated to each of the second non-verbal communications signals then the user profile is used for determining a third communications signal from the plurality of third communications signals that are defined for a single second non-verbal communications signal. Subsequently, this second non-verbal communications signal or part thereof may be transformed into the determined corresponding third communications signal.

Furthermore, there additionally may be a database SDB that is adapted to hold at least non-verbal signal from which the transformation part TP can select a third communications signal or combination of communications signals based on at least part of the incoming second non-verbal communications signal transmitted by the first communications device CD1.

Such a non-verbal communications signal may include sequences and related non-verbal elements such as vibration, tapping, and movement of the device or touch detection at a touch screen

Such a third communications signal may be an audio, video, SMS, MMS, vibration and flashing of lights and/ or any combinations thereof.

Additionally the Transforming part may include means for detecting capabilities of one or more communication devices based whereupon the third, communications signal is generated (not shown in any of figures).

The non verbal sending part NVTP has an output-terminal that is also an output-terminal of the communications device CD1. The output-terminal of the communications device CD1 is coupled to an input-terminal of the transforming network element TRNE. The input-terminal of the transforming network element TRNE is at the same time an input-terminal of the multimedia-signal reception part MMRP. The non multimedia signal reception part MMRP further is coupled with an output-terminal to an input-terminal of the transforming part TP that in turn is coupled with an output-terminal to an input-terminal of the non verbal signal transmission part NVTP. The non verbal signal transmission part NVTP has an output-terminal that is at the same time an output of the Transforming Network element TRNE. The output of the signal transmission part STP further is coupled to any of the further communication devices CD2, CD3. Additionally the Transforming part has an input-terminal that is coupled to an output-terminal of the user preferences holding part UPP and the transforming part TP is coupled with an input/output terminal to an input/output terminal of the signal database SDB.

In order to explain the execution of the present invention it is supposed that a first user with his mobile phone CD1 calls a second user on his fixed or mobile phone CD2 and a connection over the mobile network is established between both mobile phones and a communications session is started. Both users start discussing a certain subject and hence speech is sent through the network from the first communication device CD1 to the second communications device CD2.

Alternatively, any audio-, video-signal or a combination thereof may be sent from the first communications device CD1 to the second communications device CD2.

Additionally, even a third communications device CD3 or still further communications device may be involved in the previously mentioned communications session.

Furthermore, a transmitting part NVTP in the first communications device CD1 sends a second, non verbal communications signal in addition to the first, multimedia communications signal towards the at least one further communications device CD2, CD3. In particular a tapping signal of say 4 taps is sent in direction of the further communication devices. Alternatively the non-verbal communications signal could be the motion of the first communication device detected by a compass sensor or the detecting of touching a touch screen of a communications device.

This second non verbal communications signal, i.e. the 4 tap signal is received by the non verbal signal receiving part NVSRP included in the transforming network element TRNE, and forwarded to the transforming part TP, that transforms at least part of the second non-verbal communications signal into a third, communications signal.

The transformation may be done based on the recognition of a 4 tap signal stored in the signal database SDB. Alternatively the non-verbal signal may be the motion of the first communication device (CD1) detected by the compass sensor or the detecting of touching a touch screen of a communications device.

For example: the first user is telling via his mobile phone CD1 a thriller to User 2 at the second communications device CD2 also being a (mobile) phone. When the story goes, user 1 is tapping the (mobile) phone simultaneously with the telling in order to generate some background horrible music to be played on the second user's (mobile) phone to enhance the effectiveness. The tapping signal (4 taps) is encoded and sent via the non-verbal signal transmitting part NVTP and the non-verbal signal receiving part NVRP to the transforming part TP in the transforming network element, where the tapping message is transformed into the expected horrible background music.

The tapping signal can be encoded in various ways, e.g. based on the pressure of tapping, or based on the total amounts of tapping or maybe based on the rhythm of the tapping or any other intelligent sensing of the touch.

The transforming part looks up in the signal database SDB whether there is a 4 tap signal available. If the 4 tap signal is available it looks up the corresponding and linked third communications signal in the database. It is found to be horrible background music. Hence the "horrible back ground music" signal is used in the transformation and subsequently the horrible background music will be mixed with the audio speech signal and sent to the second user's (mobile) phone. At the most frightening moment of the story, the first user taps the (mobile) phone again (3 taps signal).

The tapping signal (3 taps) is encoded and again is sent via the non-verbal signal transmitting part NVTP and the non-verbal signal receiving part NVRP to the transforming part TP in the transforming network element, where the tapping message is transformed into the into a vibration plus an episode of "Screaming II" .

The tapping signal can be encoded in various ways, e.g. based on the pressure of tapping, or based on the total amounts of tapping or maybe based on the rhythm of the tapping or any other intelligent sensing of the touch.

The transforming part looks up in the signal database SDB whether there is a 3 tap signal available. If the 3 tap signal is available it looks up the corresponding and linked third communications signal in the database. It is found to be a vibration plus an episode of "Screaming II". Hence the "vibration signal plus an episode of "Screaming II" signal is used in the transformation and subsequently into a vibration plus an episode of "Screaming II" will be mixed with the audio speech signal and sent to the second user's (mobile) phone CD2 by means of the signal transmission part STP. This time, your friend, the second user is really frightened.

Assume a 5 tap signal is sent and only a 4 tap signal is has an entry then the 4 tap signal is recognized as being at least part the second non-verbal signal. The 5 taps signal subsequently transformed as being a 4 taps signal, being the "horrible back ground music" signal.

Alternatively a third user with a third communications device CD3 is involved in the same communication as described above wherein all signal sent to the second communications device CD2 would be sent to the third communications device CD3 as well.

In an alternative example: the first user is telling about a visit to the Zoo, he mentions a LION and at the same time taps your phone. Automatically, the two phones start vibrating as a lion-sound and an animation of a lion is shown on both phones as the transformation part TP recognizes the tap signal and looks this signal up in a table contained in the signal data base SDB and finds an entry for a roaring lion-sound vibration and roaring lion animation.

The signal transmission part STP then transmits the roaring lion-sound vibration and roaring lion animation to the first communication device CD1 and to the second communications device CD2 and possibly also to any further communications device involved in the communications session.

The transmission of the third communications signal including the roaring lion-sound vibration and roaring lion animation to the first communication device CD1, the second communications device CD2 and possibly any further communications device CD3 is done in addition to the first multimedia communications signal, speech in this case, that is transmitted from the first communications device CD1 to the second communications device CD2 and possibly any further communication device CD3.

Additionally the transforming part TP deals with the transforming of at least part of said first multimedia communications signal into said non-verbal communications signal is based on based on preferences of a user.

For instance in the second "LION" example, the use of the second communication device CD2 prefers not to receive any vibration during communications. The second user's profile is configured accordingly. Thus the second communication device CD2 will only receive roaring lion animation.

Additionally the transforming part TP deals with the transforming of at least part of said first multimedia communications signal into said non-verbal communications signal is based on capabilities of said communication devices CD1, CD2, CD3.

The transforming part TP of the transforming network element TRNE automatically detects the mobile communication devices' capabilities and transforms the sender information into a corresponding means that can be accepted.

Again takes the second "LION" example. The transforming part TP detects that the second communication device (CD2) is not capable of displaying flash content on its screen. Thus it only sends the vibration signal to the second communication device CD2.

It is to be noted that although the transforming part functionality is disclosed within the communications network, i.e. located within the network element of the communications network, the meant transforming part functionality alternatively may be located outside the communications network, within some network management function or even at user's premises or locally within a communications device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for communicating a first, multimedia communications signal from a first communication device (CD1) to at least one further communications device (CD2, CD3) over a communications network (CN), said method comprising the steps of:
a. sending, said first communications device (CD1), said first, multimedia communications signal to said at least one further communications device (CD2, CD3), **CHARACTERISED IN THAT** said method for multimedia communications further comprises the steps of :
b. said first communications device (CD1) sending a second, non verbal communications signal in addition to said first, multimedia communications signal towards said at least one further communications device (CD2, CD3);
c. transforming, by a transforming part (TP), at least part of said second, non verbal communications signal into a predetermined third, communications signal said third communications signal being in support of said first, multimedia communications signal.

2. Method for communicating according to claim 1, **CHARACTERISED IN THAT** said method further comprises the step of:
d. sending, by a transmitting part (GSTP), said third, communications signal to at least one of said first communications device (CD1) and said further communication devices (CD2, CD3) in addition to said first, multimedia communications signal.

3. Method for communicating according to claim 1 or 2, **CHARACTERISED IN THAT** said step of transforming said at least part of said second non-verbal communications signal into said third communications signal is based on at least one predetermined third communications signal corresponding to said at least part of said second non-verbal communications signal.

4. Method for communicating according to any of claim 1 to 3, **CHARACTERISED IN THAT** said step of transforming said at least part of said second, non-verbal communications signal into said third communications signal is additionally based on preferences of a user.

5. Method for communicating according any of claim 1 to 4, **CHARACTERISED IN THAT** said step of transforming said at least part of said second non-verbal communications signal into said third communications is based on capabilities of said communication devices (CD1, CD2, CD3).

6. Communications system, for communicating a first multimedia communications signal from a first communication device (CD1) to at least one further communications device (CD2, CD3) over a communications network (CN), said system comprising:
a. a first multimedia communications signal transmitting part in said first communications device (CD1), adapted to send said first multimedia communications signal to at least one further communications device (CD2, CD3), **CHARACTERISED IN THAT** said communications system further comprises:
b. a sending part in said first communications device (CD1), adapted to send a second, non verbal communications signal in addition to said first, multimedia communications signal towards said at least one further communications device (CD2, CD3); and
b. a transforming part (TP), adapted to transform, at least part of said second, non verbal communications signal into a predetermined third, communications signal said third communications signal being in support of said first, multimedia communications signal.

7. Communications system according to claim 6, **CHARACTERISED IN THAT** said system further comprises
d. a transmitting part (GSTP), adapted to transmit said third, communications signal to at least one of said first communications device (CD1) and said further communication devices (CD2, CD3) in addition to said first, multimedia communications signal.

8. Transforming part (TP), for use in a Communications system, for communicating a first multimedia communications signal from a first communication device (CD1) to at least one further communications device (CD2, CD3) over a communications network (CN), **CHARACTERISED IN THAT** said transforming part (TP) is adapted to transform, at least part of said second, non verbal communications signal into a predetermined third, communications signal said third communications signal being in support of said first, multimedia communications signal.

9. Network Element, **CHARACTERISED IN THAT** said network element includes a Transforming part (TP) according to claim 8.
